(19) Europäisches Patentamt
European Patent Office
Office européen des brevets

(11) **EP 1 923 555 A1**

(12) **EUROPEAN PATENT APPLICATION**

(43) Date of publication:
**21.05.2008 Bulletin 2008/21**

(51) Int Cl.:
*F02D 35/00* $^{(2006.01)}$        *F02D 41/20* $^{(2006.01)}$
*F02D 41/22* $^{(2006.01)}$        *G05D 23/19* $^{(2006.01)}$
*H02M 1/00* $^{(2007.01)}$

(21) Application number: **06255888.7**

(22) Date of filing: **17.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Delphi Technologies, Inc.**
**Troy, Michigan 48007 (US)**

(72) Inventors:
• **Sykes, Martin A. P.**
 **Kent ME8 8RB (GB)**
• **Hopley, Daniel J.**
 **Kent BR7 5EG (GB)**

(74) Representative: **Hopley, Joanne Selina et al**
**Keltie**
**Fleet Place House**
**2 Fleet Place**
**London EC4M 7ET (GB)**

(54) **Temperature protection in motor vehicle engine control units**

(57)     A method of temperature protection in a motor vehicle engine control unit (10) comprises monitoring signals indicative of the temperature of a part (16) to which a component (12) having an upper allowed operating temperature value ($T_R$) is connected in heat conducting relation and making decisions concerning the operation of the engine control unit according to an estimated temperature ($T_E$) of that component. The estimated temperature is determined using the temperature ($T_{PCB}$) indicated by the temperature indicating signals and a variable temperature value that is variable as a function of the engine control unit operating condition.

FIG. 3

EP 1 923 555 A1

**Description**

<u>Field of the Invention</u>

The invention relates to providing temperature protection in motor vehicle engine control units (ECUs) and particularly, but not exclusively, to providing temperature protection in ECUs whose function comprises controlling fuel injectors of a motor vehicle engine.

<u>Background to the Invention</u>

ECUs fitted to motor vehicle engines operate in a high temperature environment and include heat sensitive components that need to be protected against operation at temperatures in excess of a rated temperature (upper allowed operating temperature). For example, an ECU may include a component with a rated temperature of 125°C and in that case, the ECU control strategy needs to include provisions that prevent operation when the temperature of that component is at or more than 125°C.

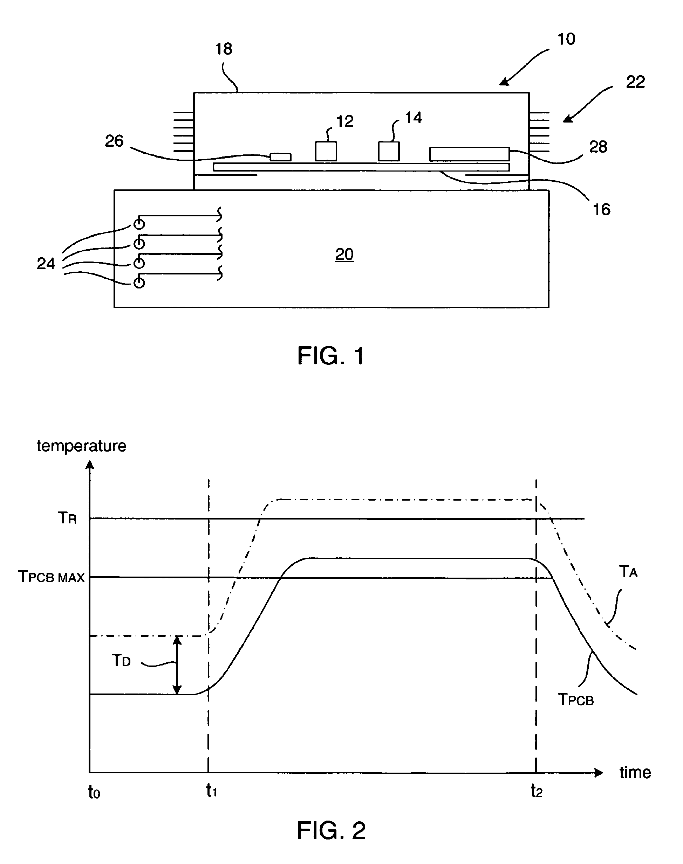

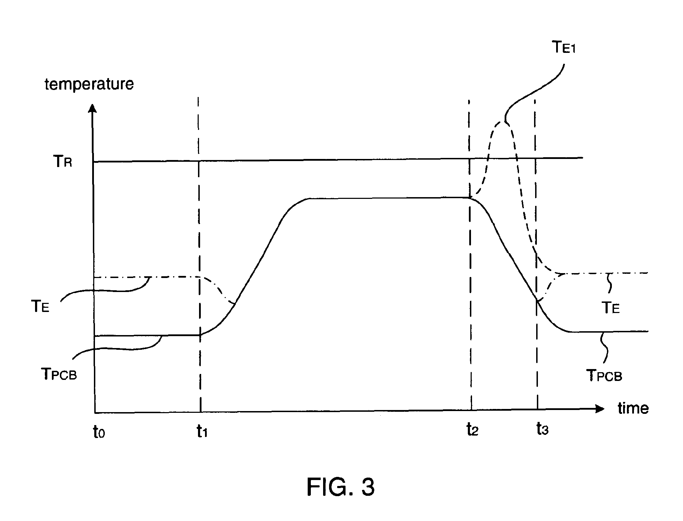

A known temperature protection control strategy for an ECU will now be described with reference to Figures 1 and 2. An ECU 10 comprises a number of components 12, 14 mounted on a PCB 16 that is fixed in a housing 18 made of a metal or metal alloy that has good heat conducting properties. In use, the housing 18 is mounted on an engine 20. The housing 18 has external fins 22 to assist with heat dissipation.

The component 12 provides electrical pulses to actuate fuel injectors 24 that inject fuel into the cylinders of the engine 20. The component 12 is identified as a key component in that its rated temperature is relatively close to the operating temperatures that may be encountered in an engine bay and so steps must be taken to protect the component against the possibility of it being damaged due to operating at temperatures above its rated temperature. In this example, the rated temperature of the key component 12 is 125°C and a control strategy is implemented to ensure that the component does not operate at temperatures greater than 125°C.

The known temperature control strategy relies on measuring the temperature of the PCB 16 and adding a constant to the measured value. The way in which the strategy works is illustrated by Figure 2. In more detail, it is known that in operation of the ECU 10, although heat from the key component 12 is transferred to the PCB 16, the PCB temperature $T_{PCB}$ will be less than that of the key component 12. For the purposes of the control strategy, it is assumed there is a constant temperature difference $T_D$ between the temperature of the key component 12 and the temperature $T_{PCB}$ of the PCB 16. The temperature difference $T_D$ defines a maximum allowable PCB temperature $T_{PCB\ MAX}$. For example, if the difference is 20°C, the maximum allowable temperature $T_{PCB\ MAX}$ for the PCB 16 is set at 105°, which corresponds to an assumed temperature $T_A$ for the key component 12 of 125°.

In operation of the ECU 10 the temperature $T_{PCB}$ of the PCB 16 is measured by means of a thermistor 26, which is positioned at a suitable location on the PCB. The thermistor 26 provides signals indicative of the temperature $T_{PCB}$ of the PCB 16. The signals from the thermistor 26 are sampled by a processor 28 and if they indicate temperature of the PCB has reached $T_{PCB\ MAX}$, action is taken to protect the key component 12 by shutting down the fuel injectors.

This control strategy works well in many circumstances. However, it can give rise to engine starting problems in hot weather or when the driver wants to restart the engine when the motor vehicle has been driven and then stopped. This problem is illustrated by the curve for the PCB temperature $T_{PCB}$ in Figure 2. Between time to and time $t_1$ the engine is running normally. At time $t_1$ the automobile is stopped and the engine switched off. When the engine is stopped many of its components and peripheral components, for example the exhaust and turbochargers, are much hotter than the ECU 10 and since the engine is no longer being cooled, heat is transferred to the cooler parts in the engine bay, including the ECU. As a consequence, the temperature $T_{PCB}$ of the PCB 16 increases and may exceed $T_{PCB\ MAX}$. Eventually, the heat dissipates and the temperature $T_{PCB}$ will fall back below $T_{PCB\ MAX}$ at time $t_2$. If an attempt is made to restart the engine while PCB temperature $T_{PCB}$ is still above $T_{PCB\ MAX}$ it will fail and the driver will have to wait for the engine to cool. This may result in a long wait for the driver, particularly if the motor vehicle is stopped in a poorly ventilated space, for example a garage, and/or the day is hot.

<u>Summary of the Invention</u>

According to a first aspect, the invention provides a method of temperature protection in a motor vehicle engine control unit, said method comprising monitoring signals indicative of the temperature of a part to which a component having an upper allowed operating temperature value is connected in heat conducting relation and making decisions concerning the operation of the engine control unit according to an estimated temperature of said component, said estimated temperature being determined using the temperature indicated by said signals and a variable temperature value that is variable as a function of the engine control unit operating condition.

In one embodiment, the estimated temperature is the sum of the temperature indicated by said signals and the variable temperature value.

It may be that, at engine start up, said variable temperature value is less than 100% of the variable temperature value for when the engine control unit is operating in an engine full load operating condition.

Preferably, the variable temperature value is determined by reference to a stored look up table.

More preferably, the variable temperature value is determined by calculation using measurements of at least one variable representative of an engine operating condition.

For example, the variable temperature value may be calculated using the relationship:

$$\text{variable temperature value} = m*x + c$$

where:

x is a value obtained using the at least one variable which is representative of the engine operating condition; and

m and c are values stored in said engine control unit.

Typically, x is a value representative of power output by said component.

In one embodiment, said component may comprise an electrical power reservoir from which power is drawn and the at least one variable representative of the engine operating condition is a switching time on the electrical power reservoir during which switching time power is supplied to the electrical power reservoir to maintain a substantially constant voltage in said electrical reservoir.

Preferably, the electrical power reservoir supplies electrical pulses to actuate engine fuel injectors.

More preferably, when said estimated temperature is at or greater than a predetermined value that is less than or equal to said upper allowed operating temperature value a decision is made to modify operation of the engine control unit to reduce heat generation by the engine control unit.

It is convenient for the decision to comprise reducing work carried out by said component. For example, the decision may comprise reducing injections made by engine fuel injectors.

Preferably, said part is a printed circuit board and said component is mounted on said printed circuit board.

The method may further comprise selectively adding a value to said variable temperature value when at engine start up it is determined the engine control unit has been energised during a period in which the engine it controls has been stopped.

According to a second aspect of the invention, there is provided a computer program product comprising at least one computer program software portion which, when executed in an execution environment, is operable to implement at least one part of the method described previously.

According to a third aspect of the invention, there is provided a data storage component having the or at least one said computer software portion mentioned previously stored thereon.

The invention further relates, in a fourth aspect, to a microcomputer provided with a data storage component as mentioned previously.

The invention also relates, in a fifth aspect, to a motor vehicle engine control unit comprising a component having an upper allowed operating temperature, a temperature sensing means arranged to sense the temperature of a part of the engine control unit that is in heat conducting relationship with said component and provide signals indicative of the sensed temperature and processing means operable to determine estimated temperatures of said component based on the sensed temperature of the part and a variable temperature value that is variable as a function of the engine control unit operating state and make control decisions based on said estimated temperature to protect said component against damage by operation at temperatures above said allowed operating temperature.

In a sixth aspect, the invention also includes a method of operating a motor vehicle engine control unit at engine start up, the method comprising comparing signals indicative of the temperature of a part of the engine control unit to which a component of the engine control unit that has an upper allowed operating temperature is connected in heat conducting relation with that upper allowed operating temperature and permitting operation of the engine control unit to carry out engine start operations when the temperature indicated by said signals is not greater than said upper allowed operating temperature. The engine start up operation may be the supply of fuel through engine fuel injectors.

In a seventh aspect, the invention also includes a motor vehicle engine control unit comprising temperature sensing means arranged to sense the temperature of a part to which a component having an upper allowed operating temperature is connected in heat conducting relation and processing means operable to compare the temperatures sensed by said sensing means with said upper allowed operating temperature at engine start up and prevent engine start up operations if the temperatures sensed by said sensing means are greater than said upper allowed operating temperature and permit engine start up operations if the temperature sensed by said sensing means is not greater than said upper allowed operating temperature.

It will be appreciated that the preferred and/or optional features of the method of the first aspect of the invention may be implemented, alone or in appropriate combination, in any of the other aspects of the invention also.

Brief Description of the Drawings

In order that the invention may be well understood, some embodiments thereof, which are given by way of example only, will now be described with reference to the drawings in which:

Figure 1 is a schematic illustration of an ECU mounted on a motor vehicle engine;

Figure 2 is a graph illustrating a known temperature protection control strategy for the ECU shown in Figure 1; and

Figure 3 is a graph illustrating embodiments of a temperature protection strategy for the ECU shown in Figure 1.

Detailed Description of the Embodiments

Some embodiments of the invention will now be described with reference to Figures 1 and 3. Referring to Figure 3, as in Figure 2, $T_R$ is the rated temperature of the key component 12, the curve $T_{PCB}$ represents the temperature of the PCB 16 as indicated by signals from the thermistor 26, to to $t_1$ is a period of time during which the engine 20 is running normally, $t_1$ is a time at which the engine is stopped and $t_2$ is a time at which the engine is restarted. The key component 12 supplies electrical pulses to actuate the fuel injectors 24. The electrical pulses are at relatively high voltages, for example 255V, and the overall power output of the key component generates significant amounts of heat that result in the key component being hotter than the PCB 16. That heat conducts from the key component 12 to the PCB 16 and so the temperature of the PCB is linked to that of the key component.

In order to protect the key component 12 against damage due to operating at temperatures in excess of its rated temperature $T_R$, the processor 28 monitors an estimated temperature $T_E$ of the key component and, if that temperature is greater than the temperature $T_R$, the fuel injectors 24 are shut down. The temperature $T_E$ is estimated by adding a variable temperature value to the sensed temperature $T_{PCB}$ of the PCB 16. The variable temperature value varies as a function of the current operating condition of the ECU and is added to the PCB temperature $T_{PCB}$ so that the estimated temperature $T_E$ for the key component 12 reflects the current operating state. This should provide a more accurate reflection of the actual temperature of the component than the assumed temperature $T_A$ that is used in the prior art as illustrated by Figure 1.

When the engine 20 is running, the variable temperature value varies as the load on the key component 12 rises or falls. Specifically, when the engine is heavily loaded, the power output by the key component 12 will be high causing high temperatures in the key component and so the variable temperature values are relatively high to reflect this. Conversely, when the engine loading is low, the power output by the key component is correspondingly lower resulting in lower temperatures in the key component and so the variable temperature values are relatively low to reflect this. Examples of how the variable temperature value is obtained will be described in more detail below.

When the engine 20 is stopped and the key is removed or in the key off position, the engine control unit 10 is no longer energised and so is not generating heat. The result is that the temperature of its components fairly rapidly converges to that of the PCB 16. For this reason, when the engine 20 is stopped, the variable temperature value can be set at zero so that the estimated temperature $T_E$ of the key component 12 is equal to the temperature $T_{PCB}$ of the PCB 16. This should provide a more accurate reflection of the actual temperature of the key component 12 than the assumed temperature $T_A$ illustrated in Figure 1, which takes no account of the fact that the key component is not working when the engine is stopped. The result is that for the same operating conditions and key component rated temperature $T_R$ and operating conditions, it is much less likely the driver will be unable to restart the engine because restart can be permitted at measured PCB temperatures $T_{PCB}$ that are higher than the $T_{PCB\ MAX}$ value used in the prior art control strategy. This can be readily appreciated by comparing Figures 2 and 3.

For some implementations, it may be undesirable for the value of the variable temperature value at engine start up to be set at zero. When the driver turns the key to its on position, the ECU 10 is energised and starts generating heat even though the engine may not be running. By way of example, when the ECU is energised by turning the key to its on position, an electrical power reservoir from which the electrical pulses used to actuate the fuel injectors 24 are drawn is powered up to and maintained at its operating voltage (for example 255V) so that power is available for immediate start up. This may result in the actual temperature of the key component being higher than the temperature $T_{PCB}$ of the PCB 16 to an extent that would make an estimated temperature $T_E$ based on a zero difference start up value sufficiently inaccurate to allow a normal start up on occasions when the actual temperature of the key component exceeds the rated temperature $T_R$ or is so close as to require a reduced power start up (described below). In tests on one ECU, it has been found that the difference may be around 5°C, but of course this may vary considerably between engine control units of different design and/or for different applications of the same engine control unit. Accordingly, it may be desirable to set a variable temperature value for engine start up that reflects this difference and so is greater than zero. For example, the start up value may be in the range zero to twenty five per cent of the variable temperature value for when the ECU is operating in an engine full load state.

It will be appreciated that whether the heat generated in the ECU 10 during periods in which the ECU is energised but the engine 20 is stopped needs to be taken into account may be to a certain extent time dependent. For example, if at engine start up the ECU and engine are relatively cool and the engine is started quickly, the initial heat build up in the ECU may not be sufficient to need to be taken into account. However, if there is a more prolonged delay between turning the key to the on position and then actually firing up the engine and/or the ambient temperature is very high, it may not be possible to ignore this initial temperature build up. It may be the case there is a considerable delay between the key moving to the key on position and firing up the engine in cases of engine restart where the driver has turned off the engine, but left the key in the on position. Whether the heat generated while the ECU is energised but the engine is stopped needs to be taken into account and the variable temperature value to be used instead of zero can both be determined by performance testing a unit. If it is found that the heat generated in those circumstances only needs to be taken into account if the key on position is maintained for a certain length of time before the engine is fired up, the default variable temperature value for start up could be set at zero, but when the processor 28 determines that the key on position has been maintained for longer than a certain amount of time, it may add a value to the default start up value. It will be appreciated that timing the key on event can be achieved by simply using the clock associated with the processor. The value added to the default engine start up variable temperature may be fixed or variable according to the length of time the key on position is maintained.

In practice, it is undesirable to have the engine run normally until the estimated temperature $T_E$ of the key component 12 exceeds the rated temperature $T_R$ of the key component and then suddenly shut down the fuel injectors 24. To reduce the likelihood of this happening, the processor 28 may take action to reduce the output of the key component 12 when the estimated temperature $T_E$ exceeds a threshold value that is less than the rated temperature $T_R$. For example, for a rated temperature $T_R$ of 125°, a threshold value of 120°C could be set at which the processor 28 causes pilot injections to be shut down. It may also be used to trigger a signal to alert the driver to the need to reduce the engine load.

Referring again to Figure 3, the curve $T_{E1}$ illustrates what can happen if the engine 20 is restarted and heavily loaded before normal engine cooling has brought the temperature of the ECU 10 and, in particular, the PCB/key component temperature down from the temperature to which they have risen during the period following stopping of the engine. Because the engine is able to restart at temperatures much closer to the rated temperature $T_R$ of the key component 12 than is possible in the prior art as illustrated by Figure 2, if the engine is heavily loaded immediately following restart there is a danger the temperature of the key component will quickly exceed the rated temperature $T_R$ with the result that the processor 28 causes the fuel injectors 24 to be shut down. To avoid this problem, the processor 28 may implement a reduced power start up control procedure when the estimated temperature $T_E$ of the key component at start up is at or above a threshold value, which could, for example, be 5°C less than the rated temperature $T_R$ of the key component. The processor 28 may implement the reduced power start up control procedure for a set period following start up and at time $t_3$, which marks the end of the set period, return to a normal full power available control strategy. Alternatively, because the estimated temperature value $T_E$ is a relatively accurate reflection of the temperature of the key component 12, the processor 28 may allow a normal start up and only implement a reduced power control procedure if the estimated temperature $T_E$ is found to rise following start up or is found to rise at a rate exceeding a threshold value.

The variable temperature values used to estimate the key component temperature when the engine is running may be obtained in many different ways, some examples of which will now be described.

One way in which the variable temperature value may be obtained is to carry out tests on an ECU 10 and store a set of values obtained from the test results in a look up table. For example, tests may be carried out during which the temperature of the key component and the temperature of the PCB are measured for a range of different values of an engine operating variable such as injections per second or power outputs from the key component. From these measurements, a set of variable temperature values for different values of injections per second or power outputs can be obtained and these are stored in the ECU in a look up table. In use, the processor 28 would monitor the output variable of the key component, look up the variable temperature for the current value of the engine operating variable and add that to the PCB temperature $T_{PCB}$ to determine an estimated temperature $T_E$ for the key component.

As an alternative to using a look up table, the variable temperature value can be calculated based on measurements of at least one engine operating variable. One example of how this can be done would be to assume there is a linear relationship between the variable temperature value on the one hand and engine speed and fuel demand on the other. To provide the necessary calibration data, an engine fitted with an ECU 10 is run at full speed with maximum fuel delivery through the injectors 24 and the temperatures of the key component 12 and PCB 16 measured to obtain a temperature difference. The measured temperature difference represents the variable temperature value for full power operation of the ECU 10. The measured temperature difference and product of the engine speed and fuel delivery can be entered into a transposition of the equation for a straight line

$$y = m * x + c$$

to determine the gradient $\underline{m}$ of the straight line ($\underline{y}$ being the measured temperature difference, $\underline{x}$ the product of the engine speed and fuel delivery values and $\underline{c}$ being the variable temperature value for engine start up). The derived value of the gradient $\underline{m}$ is stored in the ECU 10.

When the engine 20 is running, the processor 28 can calculate current variable temperature values by determining the product of the current engine speed and fuel delivery values and performing the calculation

$$y = m*x + c$$

where $y$ is the calculated current variable temperature difference value, $m$ is the stored value for the gradient, $x$ is a measurement of the current engine operating condition obtained by measuring at least one engine operating variable (in this case the product of the current engine speed and fuel delivery values) and $c$ is the variable temperature value at engine start up.

In a variation on the last example, it is assumed there is a linear relationship between the variable temperature value and the number of injections per second. In this case, the calibration data is obtained by running an ECU 10 at maximum injections per second and measuring the temperature difference between the key component 12 and the PCB 16. In the same way as in the last example, the values obtained are put into the straight line equation to calculate the gradient $m$. The calculated value of the gradient $m$ is stored in the ECU 10 and used to calculate current variable temperature values using measurements of the current injections per second in the equation

$$y = m*x + c$$

where y is the calculated variable temperature difference value, $x$ is a measurement of the current engine operating condition obtained by measuring at least one engine operating variable (in this case current injections per second) and $c$ is the variable temperature value at engine start up.

Yet another example of using an assumed linear relationship assumes the variable temperature value varies linearly with changes in the energy level delivered to the injectors 24. In this case, current and voltage at maximum energy delivery to the injectors 24 and the temperatures of the key component 12 and PCB 16 are measured in tests carried out on an ECU 10. The gradient $m$ of the straight line can then be calculated and used in the same way as in the previous examples.

A presently preferred method of obtaining the variable temperature value when the engine is running assumes there is a linear relationship between the temperature of the key component 12 and the power input required to maintain a constant voltage in a relatively high voltage electrical power reservoir that supplies the power for the electrical pulses used to actuate the injectors 24. The electrical power reservoir is maintained at a constant voltage, for example 255V. Each time a pulse is delivered to actuate an injector 24 the voltage in the reservoir drops and a switch is operated to allow the input of energy from a constant voltage source (for example at 55V), to restore the voltage in the electrical power reservoir. An operation of the switch to restore the energy level in the electrical power reservoir involves opening and closing the switch at high speed until the set energy level for the reservoir is reached. The duration of this rapid switching operation provides an accurate indicator of the power input into the electrical power reservoir and since this operation is carried out under software control, an accurate timing of the switch open period is readily obtainable.

For this example, a calibration value is obtained by running an ECU 10 at full load and measuring the temperatures of the key component 12 and the PCB 16 and timing operations of the switch. The temperature difference between the key component 12 and the PCB 16 and operation time of the switch can be used in the straight line equation as before to obtain the gradient $m$ of the line and that value is stored in the ECU 10. In operation of the ECU 10, the operation time of the switch is monitored and the current variable temperature value can be calculated by inputting the current operating time into the equation

$$y = m*x + c$$

where $y$ is the calculated variable temperature difference value, $m$ is the stored value for the gradient, $x$ is a measurement of the current engine operating condition obtained by measuring at least one engine operating variable (in this case the current operating time of the switch) and $c$ is the variable temperature value at engine start up. This method is accurate and since the monitored value is easy to obtain, it can be easily implemented.

It will be appreciated that other methods of obtaining a variable temperature value that reflects the difference between the measured temperature of the PCB 16 and the actual temperature of the key component 12 may be used. All that is required is that the method used will reflect the difference between the two temperatures with sufficient accuracy to make the estimated temperature reliable and it is possible to do all of this using data obtained by carrying out performance tests on an engine fitted with the ECU 16.

It is preferred that the measured temperature used is that of a PCB 16 on which the key component 12 is mounted. However, if another part is in sufficiently good heat transfer relationship with the key component 12 for its temperature to be a reliable indicator of the temperature of the key component 12, temperature measurements from that part could be used.

In the embodiments, the key component 12 is one that supplies electrical energy to actuate the fuel injectors of a diesel engine. It will be appreciated that the invention is not limited to this application. For example, the key component 12 could be another component of such an ECU 10 or the ECU could have functions completely unrelated to controlling the operation of fuel injectors 24. For example, the key component 12 could be a component that does not itself generate significant amounts of heat, but has a relatively low rated temperature and is located adjacent a component that generates significant amounts of heat and has a much higher rated temperature.

It will be understood that it is possible that an ECU 10 has a plurality of different components that will become a key component 12 according to particular circumstances. In that case, the processor may determine respective estimated temperatures for those components as appropriate.

It will be appreciated that while in the embodiments the processor that determines and utilises the estimated temperature to implement the control strategy is a part of the ECU 10 and this is preferred, it is not essential. The data processing and storage of the software that implements the control procedures may take place in another unit that communicates with the ECU 10.

It will be appreciated that while in the described embodiments, the estimated temperature is obtained by adding the variable temperature value to the measured temperature value, this is not essential. Instead, for example, the variable temperature value could be used as a multiplier.

It will be appreciated that while the temperature measurements are conveniently obtained using a thermistor, any other suitable temperature sensing device can be used.

It will be appreciated that the key component 12 could be a single part or a collection of parts that form a unit on the PCB 16.

It will be appreciated that in the various embodiments, an estimated temperature $T_E$ that reflects the actual operating condition of the ECU 10 is used instead of the assumed temperature $T_A$ used in the prior art and because the estimated temperature reflects the operating condition of the ECU, this allows a more flexible operation of the ECU and, in particular, reduces the likelihood that the engine will fail to start due to the temperature protection strategy used to protect one or more components of the ECU against heat damage. The estimated temperature is obtained using a variable temperature value that varies as function of the ECU operating condition. The operating condition of the ECU 10 will usually be a function of the current power output of the engine and be reflected in the loading on one or more components of the ECU 10. In the embodiments in which the variable temperature value is calculated, the calculation includes a value that is obtained by measurement of at least one engine operating variable that is related to the power output by the engine.

**Claims**

1. A method of temperature protection in a motor vehicle engine control unit (10), said method comprising monitoring signals indicative of the temperature of a part (16) to which a component (12) having an upper allowed operating temperature value ($T_R$) is connected in heat conducting relation and making decisions concerning the operation of the engine control unit (10) according to an estimated temperature ($T_E$) of said component (12), said estimated temperature being determined using the temperature ($T_{PCB}$) indicated by said signals and a variable temperature value that is variable as a function of the engine control unit operating condition.

2. A method of temperature protection in a motor vehicle engine control unit (10) as claimed in claim 1, wherein said estimated temperature ($T_E$) is the sum of the temperature indicated by said signals and the variable temperature value.

3. A method of temperature protection in a motor vehicle engine control unit (10) as claimed in claim 1 or 2, wherein at engine start up said variable temperature value is less than 100% of the variable temperature value for when the engine control unit (10) is operating in an engine full load operating condition.

4. A method of temperature protection in a motor vehicle engine control unit (10) as claimed in any one the preceding claims, wherein said variable temperature value is determined by reference to a stored look up table.

5. A method of temperature protection in a motor vehicle engine control unit (10) as claimed in any one the preceding claims, wherein said variable temperature value is determined by calculation using measurements of at least one variable representative of an engine operating condition.

6. A method of temperature protection in a motor vehicle engine control unit (10) as claimed in claim 5, wherein said variable temperature value is calculated using the relationship:

$$\text{variable temperature value} = m*x + c$$

where:

    x is a value obtained using the at least one variable representative of the engine operating condition; and
    m and c are values stored in said engine control unit (10).

**7.** A method of temperature protection in a motor vehicle engine control unit (10) as claimed in claim 6, wherein x is a value representative of power output by said component (12).

**8.** A method of temperature protection in a motor vehicle engine control unit (10) as claimed in claim 7, wherein said component (12) comprises an electrical power reservoir from which power is drawn and the at least one variable representative of the engine operating condition is a switching time on the electrical power reservoir during which switching time power is supplied to the electrical power reservoir to maintain a substantially constant voltage in said electrical reservoir.

**9.** A method as claimed in claim 8, wherein said electrical power reservoir supplies electrical pulses to_ actuate engine fuel injectors (24).

**10.** A method of temperature protection in a motor vehicle engine control unit (10) as claimed in any one of the preceding claims, wherein when said estimated temperature is at or greater than a predetermined value that is less than or equal to said upper allowed operating temperature value ($T_R$) a decision is made to modify operation of the engine control unit (10) to reduce heat generation by the engine control unit.

**11.** A method of temperature protection in a motor vehicle engine control unit (10) as claimed in claim 10, wherein said decision comprises reducing work carried out by said component (12).

**12.** A method of temperature protection in a motor vehicle engine control unit (10) as claimed in claim 11, wherein said decision comprises reducing injections made by engine fuel injectors (24).

**13.** A method of temperature protection in a motor vehicle engine control unit (10) as claimed in any one of the preceding claims, wherein said part (16) is a printed circuit board and said component (12) is mounted on said printed circuit board.

**14.** A method of temperature protection in a motor vehicle engine control unit (10) as claimed in any one of the preceding claims, further comprising selectively adding a value to said variable temperature value when at engine start up it is determined the engine control unit (10) has been energised during a period in which the engine it controls has been stopped.

**15.** A computer program product comprising at least one computer program software portion which, when executed in an execution environment, is operable to implement at least one part of the method claimed in any one of the preceding claims.

**16.** A data storage component having the or at least one said computer software portion of claim 15 stored therein.

**17.** A microcomputer provided with a data storage component as claimed in claim 16.

**18.** A motor vehicle engine control unit (10) comprising a component (12) having an upper allowed operating temperature ($T_R$), a temperature sensing means (26) arranged to sense the temperature of a part (16) of the engine control unit (10) that is in heat conducting relationship with said component (12) and provide signals indicative of the sensed temperature and processing means (28) operable to determine estimated temperatures ($T_E$) of said component based on the sensed temperature ($T_{PCB}$) of the part (16) and a variable temperature value that is variable as a function of the engine control unit operating state and make control decisions based on said estimated temperature to protect said component against damage by operation at temperatures above said allowed operating temperature ($T_R$).

**19.** A motor vehicle engine control unit (10) as claimed in claim 18, wherein said estimated temperature ($T_E$) is the sum of the sensed temperature and the variable temperature value.

**20.** A motor vehicle engine control unit (10) as claimed in claim 18 or 19, wherein said engine control unit includes a stored look up table and said variable temperature value is obtained by reference to said look up table.

**21.** A motor vehicle engine control unit (10) as claimed in claim 18 or 19, wherein said variable temperature value is determined by calculation using measurements of at least one variable representative of an engine operating condition.

**22.** A motor vehicle engine control unit (10) as claimed in claim 21, wherein said variable temperature value is calculated using the relationship:

$$\text{variable temperature value} = m*x + c$$

where:

x is a value obtained by measurement of the at least one variable representative of the engine operating condition; and
m and c are fixed values stored in said control unit.

**23.** A motor vehicle engine control unit (10) as claimed in claim 22, wherein x is a value of power output by said component (12).

24. A motor vehicle engine control unit (10) as claimed in claim 23, wherein said component (12) comprises an electrical power reservoir from which electrical power is taken to actuate fuel injectors (24) of an engine (20), said electrical power reservoir is connected to a source of electrical power by switching means and the at least one variable representative of the engine operating condition is the time said switching means is open for electrical power from the source of electrical power to supply electrical power to said electrical power reservoir to maintain a substantially constant voltage in said electrical power reservoir.

25. A motor vehicle engine control unit (10) as claimed in any one of claims 18 to 24, wherein when said estimated temperature ($T_E$) is at or greater than a predetermined value that is less than or equal to said upper allowed operating temperature value ($T_R$) said processing means (28) is operable to modify operation of the engine control unit to reduce heat generation by the engine control unit (10).

26. A motor vehicle engine control unit (10) as claimed in claim 25, wherein said processing means (28) is operable to modify operation of the engine control unit by reducing work carried out by said component (12).

27. A motor vehicle engine control unit (10) as claimed in claim 26 when dependent on claim 24, wherein said processing means (28) is operable to reduce work carried out by said component (12) by reducing injections from said fuel injectors (24).

28. A motor vehicle engine control unit (10) as claimed in any one of claims 18 to 27, wherein said part (16) is a printed circuit board and said component is mounted on the printed circuit board.

29. A motor vehicle engine control unit (10) as claimed in any one of claims 18 to 28, wherein at engine start up said variable temperature value is less than 100% of the variable temperature value for when the engine control unit is operating in an engine full load operating condition.

30. A motor vehicle engine control unit (10) as claimed in any one of claims 18 to 29, wherein said processing means (28) is operable to determine when the engine control unit has been energised when an engine it controls is stopped and to selectively add a value to said variable temperature value when it is determined that the engine control unit has been energised.

FIG. 1

FIG. 2

FIG. 3

**EP 1 923 555 A1**

**European Patent Office**

**EUROPEAN SEARCH REPORT**

Application Number

EP 06 25 5888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 198 60 762 A1 (BOSCH GMBH ROBERT [DE]) 6 July 2000 (2000-07-06) | 1,2,4,5, 10-13, 15-18, 20,21, 25-28 | INV. F02D35/00 F02D41/20 F02D41/22 G05D23/19 H02M1/00 |
| A | * the whole document * | 3,6-9, 14,19, 29,30 | |
| | ----- | | |
| X | EP 1 111 491 A2 (CUMMINS ENGINE COMPANY LTD [GB]; IVECO UK LTD [GB]; NEW HOLLAND UK LTD) 27 June 2001 (2001-06-27) | 1,2,4,5, 10-13, 15-18, 20,21, 25-28 | |
| A | * the whole document * | 3,6-9, 14,19, 22-24, 29,30 | |
| | ----- | | |
| A | EP 0 398 011 A1 (BOSCH GMBH ROBERT [DE]) 22 November 1990 (1990-11-22) * abstract * * column 1, line 1 - column 3, line 10 * | 1,15-18 | TECHNICAL FIELDS SEARCHED (IPC) F02D H02M G05D |
| | ----- | | |
| A | EP 1 403 995 A (HITACHI LTD [JP]; HITACHI CAR ENG CO LTD [JP]) 31 March 2004 (2004-03-31) * abstract * * paragraphs [0003], [0004], [0006], [0007], [0009] * * paragraphs [0011] - [0015], [0017] - [0020] * * figures 1,4 * | 1,15-18 | |
| | ----- | | |
| A | GB 2 364 793 A (CATERPILLAR INC [US]) 6 February 2002 (2002-02-06) * abstract * * page 1, lines 5-9 * * page 4, line 24 - page 8, line 29 * | 1,15-18 | |
| | ----- | | |

The present search report has been drawn up for all claims

| Place of search | Date of completion of the search | Examiner |
|---|---|---|
| Munich | 16 April 2007 | Wettemann, Mark |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

12

**ANNEX TO THE EUROPEAN SEARCH REPORT
ON EUROPEAN PATENT APPLICATION NO.**

EP 06 25 5888

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2007

| Patent document cited in search report | | | Publication date | Patent family member(s) | | Publication date |
|---|---|---|---|---|---|---|
| DE 19860762 | A1 | | 06-07-2000 | NONE | | |
| EP 1111491 | A2 | | 27-06-2001 | AT | 330268 T | 15-07-2006 |
| | | | | DE | 60028713 T2 | 16-11-2006 |
| | | | | GB | 2357593 A | 27-06-2001 |
| | | | | JP | 2001214783 A | 10-08-2001 |
| | | | | US | 2001015181 A1 | 23-08-2001 |
| EP 0398011 | A1 | | 22-11-1990 | DE | 3915709 A1 | 15-11-1990 |
| | | | | JP | 2305311 A | 18-12-1990 |
| | | | | JP | 2824315 B2 | 11-11-1998 |
| | | | | US | 5042434 A | 27-08-1991 |
| EP 1403995 | A | | 31-03-2004 | JP | 2004116435 A | 15-04-2004 |
| | | | | US | 2004118378 A1 | 24-06-2004 |
| GB 2364793 | A | | 06-02-2002 | US | 6363315 B1 | 26-03-2002 |

EPO FORM P0459

For more details about this annex : see Official Journal of the European Patent Office, No. 12/82